# EUROPEAN PATENT APPLICATION

(11) **EP 2 809 037 A1**
(43) Date of publication of application: **03.12.2014**
(21) Application number: 13305687.9
(22) Date of filing: 27.05.2013
(51) Int. Cl.: H04L 12/715, H04L 12/721

(54) **A method and a router for inter-domain routing**

(71) Applicant: ALCATEL LUCENT, 92100 Boulogne-Billancourt (FR)
(72) Inventor: Ben Houidi, Zied, 91620 Nozay (FR); Douville, Richard, 91620 Nozay (FR)
(74) Representative: Sciaux, Edmond

(57) **Abstract**

According to one embodiment, a method for a flexible inter-domain and intra-domain routing in a telecom network, comprises the step of:
- generating a message in a destination node (Dst), this message comprising a first field containing flow information that can be used for applying at least a match rule; and comprising a second field defining a path (1,2,5,6,7,9) between the destination node (Dst) and of a source node (Scr1);
- sending the message along the path (1,2,5,6,7,9) defined by the second field;
- receiving the message in each node (1,2,5,6,7,9) encountered along the path defined by the second field;
- installing, in each node (1,2,5,6,7,9) encountered along the path defined by the second field, at least one rule based on the flow information contained In the first field, and the path (1,2,5,6,7,9) defined by the second field;
- and forwarding the message to the next hop located along the path (1,2,5,6,7,9) defined by the second field.

## Description

### BACKGROUND OF THE INVENTION

### Field of the invention

The present invention generally relates to the routing in the Internet. In what follows, the term "router" will designate any piece of telecommunication network equipment having a routing function.

The Internet is made of a set of hosts that are connected together thanks to a network of dedicated routers and switches. Routers route data packets between hosts that need to communicate with each other.

Routers have two components: a control plane and a data plane.
- The control plane is the software means that implement routing protocols. Routing protocols are distributed algorithms that provide routers with routing tables. A typical routing table does a mapping between a given destination address and a next hop router to which the data packet should be forwarded.
- The forwarding plane (also called data plane) is the hardware and the software means that implement the commands of a routing table. It processes received data packets according to the rules of the routing table (e.g. it reads the header of the packet; determines the needed processing; processes the packet; forwards the packet, etc). A typical router inspects the header of each data packet and takes a decision on how to forward this packet, according to the information contained in this header. Historically, routers take a routing decision only based on the Internet protocol (IP) destination address in the header.

### Description of the prior art

The Internet is composed of a set of domains that are respectively administrated by different entities called autonomous systems. An Internet service provider has one or several autonomous systems that are networks through which it connects its customers to the rest of the Internet. Each autonomous system is composed of a set of hosts (generally either residential user machines or hosts of an enterprise site) and a set of routers and switches that ensure the forwarding of data packets between the different hosts. To ensure the global reachability (the main function of the Internet), each router should be able to correctly forward any data packet to its destination. Routing protocols are the algorithms that allow this reachability by building routing tables for routers.

There are mainly two families of routing methods:
- Interior Gateway Protocols (IGP).
- Exterior Gateway Protocols (EGP).

The interior gateway protocols work within a single domain. They allow routers to learn routes to all the other routers within the domain. Examples of interior gateway protocols are OSPF, IS-IS, MPLS/LDP or RSVP, etc.

The exterior gateway protocols are more cooperative, they allow routers to learn routes to destinations that are not within the same domain (i. e. in another autonomous system).

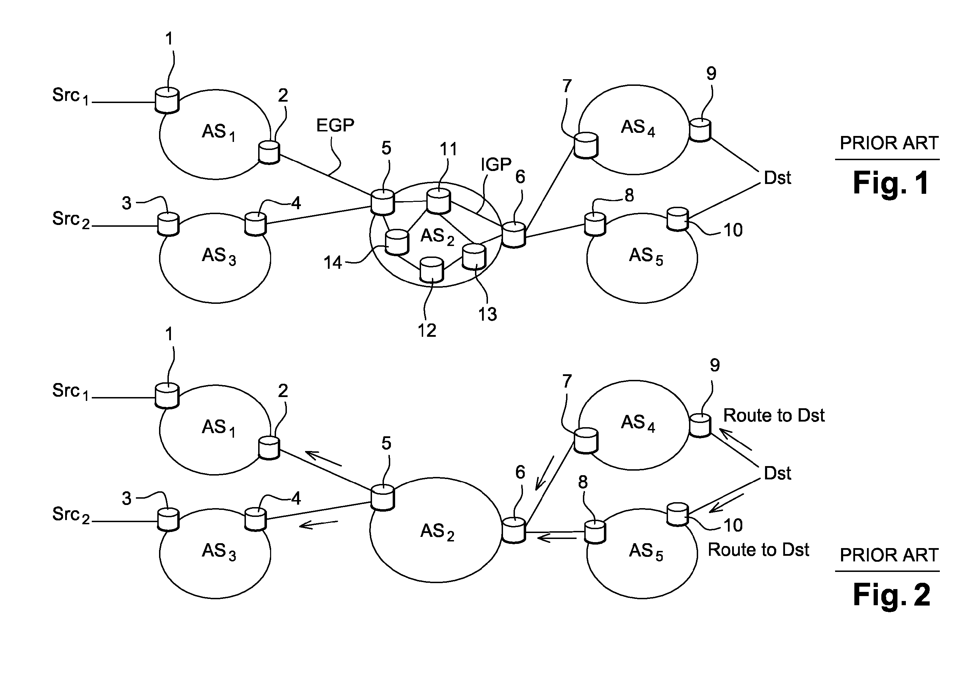

**Figure 1** illustrates these two families of gateway protocols. It represents five exemplary autonomous systems AS₁, ... , AS₅, interconnected to each other.

The autonomous system AS₂ comprises two border routers 5 and 6, and four internal routers 11-13.

The autonomous system AS₁ comprises two border routers 1 and 2 respectively linked to a source Scr₁ and to the router 5 of the autonomous system AS₂.

The autonomous system AS₃ comprises two border routers 3 and 4 respectively linked to a source Scr₂ and to the router 5 of the autonomous system AS₂.

The autonomous system AS₄ comprises two border routers 9 and 7 respectively linked to a destination Dst and to the router 6 of the autonomous system AS₂.

The autonomous system AS₅ comprises two border routers 10 and 8 respectively linked to the destination Dst and to the router 6 of the autonomous system AS₂.

The IGP that runs within the autonomous system AS₂, for instance, provides routers of this autonomous system AS₂ with routes to reach other routers within this autonomous system AS₂ (It builds a routing table for each router in the autonomous system AS₂).

Each border router of the autonomous system AS₂ runs an EGP to learn routes from distant autonomous systems AS₁, AS₃, AS₄, and AS₅. The combination of these two routing protocol, EGP and IGP, results in routers having, in their routing tables, routes to reach the entire Internet.

The EGP "de facto" used in the Internet today is the Border Gateway Protocol (BGP). It allows routers of the different autonomous systems to populate their routing tables with routes to all the destinations in the Internet. A BGP route is a vector that typically comprises the following information:
- A destination prefix: An IP address prefix that summarizes the set of destinations that can be reached by means of this route, e.g. 1.1.0.0 / 16.
- A next Hop: The address of the next router to which the data packet, destined to the set of destinations designated by the "destination prefix", should be forwarded.
- An autonomous system path: List of the autonomous systems that must be crossed in order to reach this set of destinations.
- Other attributes that enable comparing different BGP routes that go to this set of destinations.

According to the BGP, routers propagate routes, in a hop-by-hop manner, which results in all the routers having routes to all the destinations. A router that receives two routes to a same destination compares them, according to a well defined BGP decision process. Only the best route to a given set of destinations is registered in the routing table and then propagated to neighboring BGP routers.

**Figure 2** illustrates (at high level) such route propagation by BGP in the exemplary network of Figure1. It represents the same five exemplary autonomous systems AS₁,..., and AS₅, interconnected to each other, as on Figure 1. For instance, it illustrates how a route to a destination Dst propagates from the destination Dst through all the autonomous systems AS₁, ..., and AS₅. Note that the router 6 will receive two different routes towards the destination D_{ST}, but only one of these two routes (the best one) will be propagated to the rest of the Internet. At the end of this propagation process (the BGP convergence), all routers are aware of a single route towards the destination Dst. This best route is 6-7-9 for instance.

BGP advertises a single route towards a given destination (e.g. Dst). As a consequence, data packets coming from two different sources (or two different applications) but going to a same destination will necessarily follow the same BGP advertised route. For instance, on Figure 2, starting from the router 5, traffic that comes from the source Src1 and traffic that comes from the source Src2 will follow the same inter-domain route (6-7-9 in this example) to the destination Dst.

The Interior Gateway Protocols (IGP) work in a similar way as the BGP: Routing is done on a destination address basis.

So there is a need to provide a more flexible method for routing flows in the Internet, taking into account not only the destination address but also the source address, and possibly other parameters of the flow (e.g. transport control protocol ports, or even applicative information).

### The following other known methods have been proposed:

### 1) At the forwarding plane level:

-- A) Policy-Based Routing (PBR): It enables a router to set up special rules to treat data packets. It uses access control lists and route maps. In particular, it enables to classify packets according to some information, other than the sole destination address, this information being carried in the data packet header. It roughly consists in a set of match rules and a set of actions. The match rules identify the traffic flows (e.g. traffic that comes from the source Src1 and that goes to the destination D_{ST}, or traffic that comes from the source Src1 on Transport Control Protocol port X). The set of actions specify the actions that must be taken for the traffic flows that match a given rule. Examples of these actions can be: "dropping" the traffic, or "forwarding" the traffic to a specific interface. By combining these match rules and actions, it is possible, for a given router, to do a flow routing.
   Disadvantages of the policy-based routing, as concerns flexibility:
   - - - One can only apply it to a single domain (An autonomous system), because the routers of different domains are respectively managed by different network administrators.
   - - -There is no single procedure to ensure a coherent flow route across one single domain. In fact, in order to implement a flow route inside a domain, the network (domain) administrator needs to enforce these rules separately on each router.
-- B) A two-Dimensional IP routing architecture: It proposes a forwarding plane router architecture that supports not only destination address based routing, but also source address based routing.
   Disadvantages of this two-dimensional IP routing architecture:
   - - - Similarly to the policy-based routing, this method only provides a routing on the forwarding plane: It does not provide a way to build coherent routing tables in a distributed way, i. e. a way that insures flow routing.
   - - -The two-dimensional IP routing architecture supports source based routing, but it does not support routing based on any other parameter.
-- C) OpenFlow: It is a new standard that enables a software controller to pilot the forwarding plane of a router. A router is called an "OpenFlow switch" in this case. An OpenFlow switch is capable of routing flows according to other parameters than the destination address. It works in a similar way to PBR described above, with match rules and actions to be taken if the flows match the rules.

Disadvantages of OpenFlow:
- - -It can be only applied to a single domain: An OpenFlow controller of a domain cannot control an OpenFlow switch of another domain to install match/action rules on it.
- - -There is no single procedure to ensure a coherent flow route across one single domain. Switches can be controlled by different controllers (and not necessarily one single controller for all the switches). In order to implement a flow route inside a domain, the network (domain) administrator must enforce these rules separately on each router.

### 2) At the control plane level:

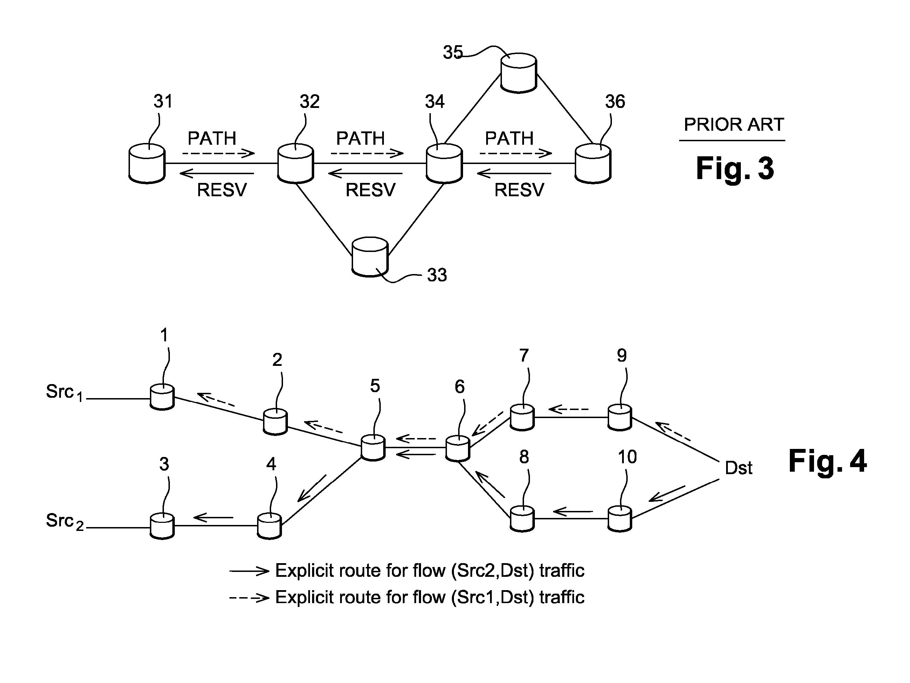

-- A) Border Gateway Protocol flow specification [RFC 5575]:
   These extensions of BGP were introduced to allow for cooperative filtering of undesirable traffic (e.g. deny the traffic from a source address that was detected as issuing deny of service attacks). The idea is to allow BGP to carry, in addition to the IP destination address prefix, filters and actions to be taken towards the traffic that matches these filters.
   Disadvantage the Border Gateway Protocol flow specification:
   As illustrated by Figure 2, a BGP route is flooded so that the "entire" Internet learns about it (if no better route exists). So the BGP specification does not enable forcing the setup of a specific path for a specific flow, in order to have more control on the routing of the flow.
-- B) Resource Reservation Protocol (RSVP) and Resource Reservation Protocol - Traffic Engineering (RSVP-TE):
   RSVP is a protocol that allows for the establishment and the reservation of a path across a network of routers. It allows setting up (among others) an explicit path in terms of hops that must be crossed. RSVP uses two types of messages: A message PATH that contains an explicit route, and a message RESV sent back from the destination to the source, in order to reserve the path and set it up, as concerns the forwarding plane. RSVP-TE is an extension of RSVP for traffic engineering. **Figure 3** illustrates how RSVP reserves a flow route in an exemplary network comprising routers 31 to 36. The routers 31, 32, 34, 36 are linked in series. The router 35 is linked to the router 34 and to the router 36. The router 33 is linked to the router 34 and to the router 32. First, messages PATH that contain an explicit route 31-32-34-36 are sent hop by hop following the explicit route 31-32-34-36. Then, a series of messages RESV is sent back from the destination (Router 36) to the source (Router 31) in order to reserve a path, along the routers 36-34-32-31. They set the reserved path up as concerns the forwarding plane. If the reservation is successful, then the forwarding of packets can begin.
   Disadvantage of RSVP:
   RSVP and RSVP-TE do not specify which flows need to follow a given reserved path. Their role is only to set up a path. The association of each flow to an explicit path needs to be done separately.
-- C) The OpenFlow protocol: As explained earlier when dealing with an OpenFlow switch, the OpenFlow protocol enables an OpenFlow controller (a software controller) to pilot an OpenFlow switch to install rules for given flows. These rules are in the form of :
   - - -A match criteria (that identifies a flow, e.g. a source IP address, a destination IP address, and TCP ports, etc);
   - - - An action that needs to be taken on the identified flow (forwarding to specific port, modifying a packet header to add MPLS label, for instance, etc...).
      Disadvantage of the OpenFlow protocol:
      The main disadvantage of the OpenFlow protocol is that no mechanism has been thought to establishing a flow route that crosses multiple domains. An Open Flow controller actually can only command the switches that are in its domain, and cannot therefore "force" a flow route at the inter-domain level.

Another disadvantage is that the Openflow protocol operates in a centralized fashion. The flow route enforcement cannot be done therefore in a distributed fashion. In fact, enforcing a flow route in a network would need that a centralized controller controls all the routers in this network.

So there is no quite satisfactory method for routing flows, both at the intra and at the inter-domain level, as a function of not only the destination address but also of the source address, and possibly other parameters of the flow (e.g. transport control protocol ports, or even applicative information).

The aim of the present invention is to provide a more flexible method for routing flows at the inter-domain level.

### SUMMARY OF THE INVENTION

The object of the invention is a method for a flexible inter-domain and intra-domain routing in a telecom network, **characterized in that** it comprises the step of:
- generating a message in a destination node, this message comprising a first field containing flow information that can be used for applying at least a match rule; and comprising a second field defining a path between the destination node and of a source node;
- sending the message along the path defined by the second field;
- receiving the message in each node encountered along the path defined by the second field;
- installing, in each node encountered along the path defined by the second field, at least one rule based on the flow information contained In the first field, and the path defined by the second field;
- and forwarding the message to the next hop located along the path defined by the second field.

As the message propagates along the path defined by the second field, routers update their respective routing tables in order to enforce such a path. Thanks to the flow information contained in the first field, the propagated message enables a router to store at least one match rule in order to identify a flow by applying this match rule.

Thanks to the path information contained in the second field, the propagated message defines each router constituting an end-to-end path between a source and a destination, for a packet flow identified by applying this match rule. The end to end path is not defined by a destination address only. So this method enables the propagation of a flow route over a pre-determined network path, for a pre-determined flow. This "forces" a specific flow to follow a specific path that was pre-determined in advance (by a mechanism which is out of the scope of this invention).

The overall signaling procedure can be done as well from the source to the destination, and not necessarily only from the destination node to the source. The same message can go from the source to the destination and establish the flow route.

So a variant of the method according to the invention is **characterized in that** it comprises the step of:
- generating a message in a source node, this message comprising a first field containing flow information that can be used for applying at least a match rule; and comprising a second field defining a path between the source node and a destination node;
- sending the message along the path defined by the second field;
- receiving the message in each node encountered along the path defined by the second field;
- installing, in each node encountered along the path defined by the second field, at least one rule based on the flow information contained In the first field, and the path defined by the second field;
- and forwarding the message to the next hop located along the path defined by the second field.

The path defined by the second field can be explicit. In this case, the second field contains the set of hops that the flow must follow. As such, the path is used for two purposes:
- Specify the next hop to which the matching flow needs to be forwarded (on the data plane path).
- Specify the next router to which the flow route needs to be sent (on the control plane).

The path defined by the second field can be loose. For instance, the second field specifies only a set of routers (that we call gateways) that the flow must follow, but without specifying the entire path and the exact intermediate hops between these gateways. In this case, the gateways (routers specified in the loose path) are free to choose the intermediate path that the flow will have to follow between them. In order to force a flow route between two consecutive gateways contained in a loose path (and respect the constraint of the network loose path), the gateways are free either to use a tunnelling technique (e.g. encapsulate the flow in an Muli Protocol Label Switching) or the method according to the invention to force the route that the flow must follow.

The association between the flow that needs to be routed and a path (either explicit or loose) is preferably done at the same time for simplifying the operations of networks.

The method according to the invention is peculiarly useful for propagating a predefined inter-domain flow route; however it can be also applied at the intra domain level.

Another object of the invention is a router implementing this method.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1 (above described) illustrates two families of known gateway protocols.
- Figure 2 (above described) illustrates the flow route propagation by BGP in the exemplary network of Figure1.
- Figure 3 (above described) illustrates how the protocol RSVP reserves a flow route in an exemplary network.
- Figure 4 illustrates the method according to the invention in an exemplary network that is the same as on figure 2, except that the routers are implementing the method according to the invention.

### DETAILED DESCRIPTION OF A PREFERRED EMBODIMENT

**Figure 4** illustrates the method according to the invention in an exemplary network that is the same as on figure 2, except that the routers are implementing the method according to the invention.

In this example, the goal is to set up a flow route 1-2-5-6-7-9 for a flow that comes from the source Src1 and goes towards the destination Dst; and to set up another flow route 3-4-5-6-8-10 for another flow that comes from the source Src 2 and that goes towards the same destination Dst.

The destination node Dst generates two flow route messages:
- Message 1 comprising two fields, sent to the source Src1:
   - - "Flow information for applying at least one match rule": Source IP address "Src1" and destination IP address "Dst" (The rules for flow matching implicitly being: match "source IP address Src1" and "destination IP address Dst".
   - - "Path": An explicit path (1,2,5,6,7,9) in this example.
- Message 2 comprising two fields, sent to the source Scr2:
   - - "Flow information for applying at least one match rule": Source IP address "Src2" and destination IP address "Dst" (The rules for flow matching implicitly being: match "source IP address Src2" and "destination IP address Dst".
   - - "Path": An explicit path (3,4,5,6,8,10) in this example.

Each router of the path 1-2-5-6-7-9 that receives the message 1 stores the rule Source IP address = "Src1" and destination IP address = "Dst"; and the route (1,2,5,6,7,9) for a first flow. It forwards the message to the next hop mentioned in the path field of the message 1.

Each router of the path 4-5-6-8-10 that receives the message 2 installs the rule Source IP address = "Src2" and destination IP address = "Dst"); and the route (3,4,5,6,8,10) for a second flow. It forwards the message 2 to the next hop mentioned in the path field of the message 2.

At the end of the process each router has the correct flow route to the destination. So routes can be automatically set based on router identifiers other than the destination address.

This advantage also applies for intra-domain routing.

The overall signaling procedure can be done as well from the source to the destination, and not necessarily only from the destination node to the source. The same message can go from the source to the destination and establish the flow route.

For instance, in an exemplary network that is the same as on figure 2, except that the routers are implementing the method according to the invention, the method may comprise the steps of:
- generating a message in a source node Scr₁, this message comprising a first field containing flow information that can be used for applying at least a match rule; and comprising a second field defining a path 1,2,5,6,7,9 between the source node Scr1 and the destination node Dst;
- sending the message along the path 1,2,5,6,7,9 defined by the second field;
- receiving the message in each node 1,2,5,6,7,9 encountered along the path defined by the second field;
- installing, in each node 1,2,5,6,7,9 encountered along the path defined by the second field, at least one rule based on the flow information contained In the first field, and the path 1,2,5,6,7,9 defined by the second field;
- and forwarding the message to the next hop located along the path 1,2,5,6,7,9 defined by the second field.

Destination based routing of data flows treats all the sources (customers) equally. The method according to the invention opens the way towards having assured quality transport pipes that can be sold to specific customers (sources) that pay for it.

In another embodiment, the path field does not contain an explicit path (list of router identifiers) but simply a list of domain identifiers. In this case, it is up to the domain that receives the route flow setting message to explicit the path, i. e. to choose a list of routers in this domain.

In another embodiment, other parameters can be added to each flow route message. For instance: a qualitative or a quantitative description of how the traffic should be processed in terms of quality (e.g. Mean rate, or bandwidth, loss, availability of the path, etc). This implies additional match rules for determining a path corresponding to this qualitative or a quantitative description.

In another embodiment, the flow information field can be augmented with layer 2 information. This would help setting inter-domain layer 2 tunnels (like pseudo- wire tunnels): it is possible to classify flows based on layer 2 information (For example: Source MAC address, VLAN identifier, etc). We would gain a lot of flexibility by carrying this information. This would facilitate setting layer 2 services in an inter-domain fashion.

The method according to the invention can be implemented in a processor with a memory storing a set of machine executable program instructions, which, when executed on the processor, cause the processor to perform all the steps of the method according to the invention.

## Claims

1. A method for a flexible inter-domain and intra-domain routing in a telecom network, **characterized in that** it comprises the step of:
- generating a message in a destination node (Dst), this message comprising a first field containing flow information that can be used for applying at least a match rule; and comprising a second field defining a path (1,2,5,6,7,9) between the destination node (Dst) and of a source node (Scr1);
- sending the message along the path (1,2,5,6,7,9) defined by the second field;
- receiving the message in each node (1,2,5,6,7,9) encountered along the path defined by the second field;
- installing, in each node (1,2,5,6,7,9) encountered along the path defined by the second field, at least one rule based on the flow information contained In the first field, and the path (1,2,5,6,7,9) defined by the second field;
- and forwarding the message to the next hop located along the path (1,2,5,6,7,9) defined by the second field.

2. A method for a flexible inter-domain and intra-domain routing in a telecom network, **characterized in that** it comprises the step of:
- generating a message in a source node (Scr₁), this message comprising a first field containing flow information that can be used for applying at least a match rule; and comprising a second field defining a path (1,2,5,6,7,9) between the source node (Scr₁) and a destination node (Dst);
- sending the message along the path (1,2,5,6,7,9) defined by the second field;
- receiving the message in each node (1,2,5,6,7,9) encountered along the path defined by the second field;
- installing, in each node (1,2,5,6,7,9) encountered along the path defined by the second field, at least one rule based on the flow information contained In the first field, and the path (1,2,5,6,7,9) defined by the second field;
- and forwarding the message to the next hop located along the path (1,2,5,6,7,9) defined by the second field.

3. A method according to claim 1 or 2, wherein the second field contains an explicit list of router identifiers.

4. A method according to claim 1 or 2, wherein the second field contain a list of domain identifiers.

5. A method according to claim 1 or 2, wherein the first field of the message further comprises a qualitative or a quantitative description of how the traffic should be processed by a router.

6. A router for a flexible inter-domain routing in a telecom network, **characterized in that** it comprises means for implementing the method according to one of the claims 1-5.

7. A digital data storage medium storing a set of machine executable program instructions, which, when executed on a processor, cause the processor to perform all the method steps of the method according to one of the claims1-5.

8. A computer program product comprising computer-executable instructions for performing a method when the program is run on a computer, the method comprising the steps of one of the claims 1-5.

## Amended claims

### Amended claims in accordance with Rule 137(2) EPC.

**1.** A method for a flexible inter-domain and intra-domain routing in a telecom network, **characterized in that** it comprises the step of:
- generating, for a given flow route that data packets will have to follow, a routing message in a first node (Dst ; Scr₁), this message comprising a first field containing flow information that can be used for applying at least a match rule; and comprising a second field defining a path (1,2,5,6,7,9) between the first node (Dst) and of a second node (Scr₁; Dst) respectively at the ends of the given flow route;
- sending the routing message along the path (1,2,5,6,7,9) defined by the second field, from the first node to the second node;
- receiving the routing message in each node (1,2,5,6,7,9) encountered along the path defined by the second field;
- storing, in each node (1,2,5,6,7,9) encountered along the path defined by the second field, at least one rule based on the flow information contained In the first field, and the path (1,2,5,6,7,9) defined by the second field;
- and forwarding the routing message to the next hop located along the path (1,2,5,6,7,9) defined by the second field.

**2.** A method according to claim 1, wherein the first node is the destination node of a given flow, and the second node is the source node of this given flow.

**3.** A method according to claim 1 wherein the first node is the source node of a given flow, and the second node is the destination node of this given flow.

**4.** A method according to claim 1, wherein the second field contains an explicit list of router identifiers.

**5.** A method according to claim 1, wherein the second field contain a list of domain identifiers.

**6.** A method according to claim 1, wherein the first field of the message further comprises a qualitative or a quantitative description of how the traffic should be processed by a router.

**7.** A router for a flexible inter-domain routing in a telecom network, **characterized in that** it comprises means for implementing the method according to one of the claims 1-6.

**8.** A digital data storage medium storing a set of machine executable program instructions, which, when executed on a processor, cause the processor to perform all the method steps of the method according to one of the claims1-6.

**9.** A computer program product comprising computer-executable instructions for performing a method when the program is run on a computer, the method comprising the steps of one of the claims 1 -6.
